# EUROPÄISCHE PATENTSCHRIFT

(11) **EP 3 374 227 B1**
(45) Veröffentlichungstag und Bekanntmachung des Hinweises auf die Patenterteilung: **18.09.2019**
(21) Anmeldenummer: 16788478.2
(22) Anmeldetag: 21.10.2016
(51) Int. Cl.: H01M 2/10, H01M 10/42, H05K 7/00, H01H 85/20, H01M 10/48, B60L 53/16, B60L 50/64

(54) **HOCHSPANNUNGSBATTERIE FÜR EIN KRAFTFAHRZEUG UND KRAFTFAHRZEUG**
HIGH-VOLTAGE BATTERY FOR A MOTOR VEHICLE, AND MOTOR VEHICLE
BATTERIE HAUTE TENSION POUR VÉHICULE AUTOMOBILE ET VÉHICULE AUTOMOBILE

(30) Priorität: 10.11.2015 DE 102015222137
(43) Veröffentlichungstag der Anmeldung: 19.09.2018
(73) Patentinhaber: Audi AG, 85045 Ingolstadt (DE)
(72) Erfinder: PÖPPEL, Armin, 85080 Gaimersheim (DE); GLASS, Thomas, 84048 Mainburg (DE)
(86) Internationale Anmeldenummer: PCT/EP2016/075441
(87) Internationale Veröffentlichungsnummer: WO 2017/080797

(56) Entgegenhaltungen:
- WO-A1-2008/035873
- US-A1- 2007 216 226
- US-A1- 2014 342 196
- US-B1- 8 691 416

## Beschreibung

Die Erfindung betrifft eine Hochspannungsbatterie für ein Kraftfahrzeug, aufweisend wenigstens ein Speicherelement für elektrische Energie, wenigstens eine mit einer niedrigeren Spannung als die Hochspannung betriebene Steuereinheit und eine wenigstens ein Schütz und/oder wenigstens eine Sicherung als elektrische Komponenten umfassende Baueinheit, wobei die Baueinheit extern zu einem das Speicherelement und die Steuereinheit aufnehmenden Gehäuse an diesem derart in einer vorgegebenen Lage befestigt ist, dass wenigstens zwei mit wenigstens einer der elektrischen Komponenten der Baueinheit verbundene Hochspannungskontakte der Baueinheit bei Aufstecken der Baueinheit an das Gehäuse mit zugeordneten gehäuseseitigen Hochspannungskontakten und wenigstens eine wenigstens einen Stromversorgungskontakt und/oder wenigstens einen Steuerleitungskontakt umfassende Kontaktanordnung der Baueinheit mit einer zugeordneten gehäuseseitigen, mit der Steuereinheit verbundenen Kontaktanordnung elektrisch leitend verbunden werden. Daneben betrifft die Erfindung ein Kraftfahrzeug und ein Verfahren zum Anbringen einer Baueinheit an einem Gehäuse einer Hochspannungsbatterie.

Moderne Kraftfahrzeuge mit einer Option auf Elektrobetrieb, welche mithin einen Elektromotor aufweisen, sind üblicherweise mit einer Hochspannungsbatterie versehen, die die für den Elektromotor benötigte elektrische Energie zur Verfügung stellt. Doch auch außerhalb von solchen Elektro- oder Hybridkraftfahrzeugen wurden bereits Hochspannungsbatterien in Kraftfahrzeugen vorgeschlagen, um bestimmte Verbraucher bedienen zu können, beispielsweise Klimaanlagen und dergleichen. Dabei soll unter einer Hochspannung im Kontext von Kraftfahrzeugen vorliegend jede Spannung verstanden werden, die oberhalb des üblichen Spannungsbereichs für Kraftfahrzeuge, insbesondere oberhalb von 48 V, liegt.

Derartige Hochspannungsbatterien, insbesondere solche, die in Elektro- oder Hybridkraftfahrzeugen eingesetzt werden, weisen meist auch eine bestimmte Eigenintelligenz auf, das bedeutet, ein Teil der der Hochspannungsbatterie zugeordneten Steuerlogik ist in Form von Steuereinheiten innerhalb der Hochspannungsbatterie realisiert. Beispielsweise wurden als Steuereinheiten bereits einzelnen Batteriezellen als Speicherelemente zugeordnete Controller vorgeschlagen, so dass eine derartige Steuereinheit den Betrieb der Batteriezelle oder allgemein des Speicherelements überwachen und gegebenenfalls sogar beeinflussen kann. Für derartige Steuereinheiten als Teil der Hochspannungsbatterie werden üblicherweise die niedrigeren Spannungen verwendet, die in Kraftfahrzeug-Bordnetzen für sonstige Verbraucher, beispielsweise Steuergeräte, Anzeigemittel und dergleichen verwendet wird. Diese Niedrigspannung beträgt bei vielen bekannten Kraftfahrzeugen 12 V, teilweise auch 24 V. Mithin weisen moderne Hochspannungsbatterien neben Hochspannungsanschlüssen auch Niedrigspannungsanschlüsse und/oder Steuerleitungsanschlüsse auf.

Ein wesentlicher weiterer Bestandteil moderner Hochspannungsbatterien sind Schalteinrichtungen (Schütze) und Sicherungen, die zum einen für eine erhöhte Sicherheit sorgen, zum anderen aber durch entsprechende Ansteuerung sicherstellen können, dass an den Hochspannungsanschlüssen der Hochspannungsbatterie die gewünschte richtige Spannung anliegt und die elektrische Energie optimiert aus den einzelnen Speicherelementen, beispielsweise Batteriezellen, entnommen wird.

Im Stand der Technik wurden bereits modular aufgebaute Hochspannungsbatterien vorgeschlagen, in denen eine Baueinheit vorgesehen ist, die die Schalteinrichtungen (Schütze) und Sicherungen enthält, mithin zusammenfasst. Eine derartige Baueinheit kann beispielsweise als Schützbox oder "battery junction box" (BJB) bezeichnet werden. Derartige Baueinheiten werden innerhalb der Hochspannungsbatterie eingebaut, so dass das Gehäuse der Hochspannungsbatterie, welches auch die Speicherelemente enthält, geöffnet werden muss, wenn auf diese Baueinheit zugegriffen werden soll. Es ist mithin ein Arbeiten bei Hochspannung gegeben, wozu insbesondere qualifiziertes Fachpersonal benötigt wird.

Eine gattungsbildende Vorrichtung ist aus US 8691416 B1 bekannt. Darin ist ein modulares Energieversorgungssystem für ein Kraftfahrzeug offenbart, das mehrere Batterien sowie mit den Batterien verbundene Verbindungsmodule umfasst. Zur Befestigung und Ausrichtung der Verbindungsmodule mit den Batterien sind Befestigungsstifte, die in entsprechende Ausnehmungen eingreifen, vorgesehen.

Eine weitere modulare Vorrichtung zur Energieversorgung eines Kraftfahrzeugs umfassend mehrere Batterien ist aus US 2007/0216226 A1 bekannt. Die Batterien sind hierbei in einem Gehäuse aufgenommen, wobei die Batterien durch das Anschließen einer Steckereinheit an eine entsprechende Steckereinheitsbasis des Gehäuses in Reihe geschaltet werden können.

Ein modulare Batterieanordnung mit einer an die Batterieanordnung montierbare Schnittstelle, über die die Batterien aneinander geschalten werden sowie die Verbindung zu einem externen Stromkreis realisiert wird, ist in WO 2008/035873 A1 offenbart.

Der Erfindung liegt daher die Aufgabe zugrunde, eine Möglichkeit anzugeben, Wartungsmaßnahmen bezüglich einer wenigstens eine Schalteinrichtung und/oder wenigstens eine Sicherung enthaltenden Baueinheit bei einer Hochspannungsbatterie zu vereinfachen.

Zur Lösung dieser Aufgabe ist bei einer Hochspannungsbatterie der eingangs genannten Art erfindungsgemäß vorgesehen, dass die Baueinheit über als Schrauben vorgesehene Befestigungsmittel derart an dem Gehäuse gehaltert ist, dass die durch die Kontaktanordnungen und durch die Hochspannungskontakte gebildeten Schnittstellen dann kontaktiert werden, wenn die Baueinheit durch die Schrauben an dem Gehäuse befestigt wird.

Dabei kann die von der Hochspannungsbatterie zur Verfügung gestellte Hochspannung, die sich beispielsweise durch Reihenschaltung wenigstens eines Teils der Speicherelemente, die als Batteriezellen ausgebildet sein können, ergeben kann, größer als 48 V, insbesondere als 100 V, sein. Die niedrigere, für die Steuereinheiten benötigte Spannung kann beispielsweise 12 V oder 24 V betragen. Gemäß der vorliegenden Erfindung ist auch hier als Baueinheit eine Schützbox bzw. eine "battery junction box" (BJB) vorgesehen, die sämtliche Schalteinrichtungen und Sicherungen enthält, die verwendet werden, um aus den Spannungen der einzelnen Speicherelemente die letztlich von der Batterie auszugebende Hochspannung zusammenzustellen und Sicherheitsmaßnahmen, insbesondere bei Fehlverschaltungen und/oder sonstigen Fehlerfällen, durch die Sicherungen zu bieten. Dabei sei im Übrigen angemerkt, dass es die vorliegende Erfindung nicht ausschließt, dass auch wenigstens eine mit der niedrigeren Spannung betriebene Steuereinheit innerhalb der Baueinheit verbaut ist, beispielsweise eine, die sich auf das Ansteuern der Schalteinrichtungen und/oder Sicherungen bezieht. Zweckmäßig sind wenigstens ein Teil der Steuereinheiten, die innerhalb des Gehäuses der Hochspannungsbatterie verbaut sind, jeweils Gruppen von wenigstens einem Speicherelement zugeordnet (Batteriezellen-Controller). Derartige Steuereinheiten können dazu ausgebildet sein, den Betrieb der einzelnen Speicherelemente zu überwachen und/oder aufgrund von Steuersignalen und/oder selbst festgestellten Betriebsbedingungen anzupassen.

Erfindungsgemäß wird nun vorgeschlagen, die Baueinheit nicht länger innerhalb des Batteriegehäuses zu verbauen, sondern diese außen an dem Gehäuse anzubringen und es so auszugestalten, dass sämtliche Kontaktierungen, die zu anderen Komponenten der Hochspannungsbatterie vorzunehmen sind, bereits mit dem Vorgang des mechanischen Verbaus der Baueinheit automatisch hergestellt werden. Das bedeutet, die Schützbox weist ihrerseits Hochspannungskontakte und die der niedrigen Spannung zugeordnete Kontaktanordnung auf, wobei insbesondere entweder die gehäuseseitigen oder aber bevorzugt die baueinheitseitigen Kontakte hervorstehen, so dass letztlich ein Aufstecken der Baueinheit auf das Batteriegehäuse erfolgt, in dessen Ablauf die hervorstehenden Kontakte in entsprechende, die zugehörigen Kontakte enthaltende Vertiefungen als Aufnahmen eingreifen, so dass die Kontaktierung mit der mechanischen Montage vollständig hergestellt wird, das bedeutet, sowohl für die Hochspannungskontakte als auch für die niedrigen Spannung bzw. der Steuerung zugeordnete Kontakte. Somit ist eine besonders einfache und schnelle Kontaktierung und Dekontaktierung der Schützbox gemeinsam mit der mechanischen Montage gegeben.

Eine besonders vorteilhafte Weiterbildung der vorliegenden Erfindung sieht vor, dass eine Berührschutzvorrichtung wenigstens für die Hochspannungskontakte zum Berührschutz bei hergestelltem Kontakt während des Aufsteckens der Baueinheit vorgesehen ist. Ist mithin die direkte Verbindung zumindest bezüglich der Hochspannungskontakte berührgeschützt ausgeführt, und erfolgt ein Herstellen der Hochspannungsverbindung erst dann, wenn keine spannungsführenden Teile mehr durch Werkzeuge und/oder Teile des menschlichen Körpers berührt werden können, ist auch eine äußerst sichere Kontaktierung und Montage der Baueinheit möglich, insbesondere auch durch Personen, die nicht für die Arbeit mit Hochspannung ausgebildet sind.

In diesem Kontext wird es besonders bevorzugt, wenn die baueinheitseitigen Hochspannungskontakte aus dieser hervorstehend ausgebildet sind und die gehäuseseitigen Hochspannungskontakte versenkt in Aufnahmen für die baueinheitseitigen Hochspannungskontakte angeordnet sind, wobei die baueinheitseitigen Hochspannungskontakte baueinheitseitig über eine Länge mit einem isolierenden Material umgeben sind, die größer als die Tiefe der Aufnahmen ist. Auf diese Art und Weise ist sichergestellt, dass zu dem Zeitpunkt, wo sich die Hochspannungskontakte gegenseitig berühren, mithin eine elektrische Verbindung hergestellt ist, allenfalls noch berührgeschützte Anteile der baueinheitseitigen Hochspannungskontakte nach außen freiliegen können, welche aufgrund des isolierenden Materials jedoch durch Werkzeug und/oder Teile einer arbeitenden Person berührt werden können, ohne dass ein Risiko besteht.

Mithin wird letztlich in diesen Ausgestaltungen eine Direktsteckverbindung geschaffen, die eine Montage/Demontage der als Schützbox ausgebildeten Baueinheit ermöglicht, ohne dass an unter Hochspannung stehenden Komponenten gearbeitet werden muss.

Die Baueinheit ist zweckmäßigerweise über als Schrauben vorgesehene Befestigungsmittel an dem Gehäuse gehaltert. Spätestens dann, wenn die Baueinheit durch die Schrauben an dem Batteriegehäuse befestigt wird, kontaktieren sich die durch die verschiedenen Kontakte gebildeten Schnittstellen.

Eine besonders zweckmäßige Weiterbildung ergibt sich auch dann, wenn das Gehäuse und die Hochspannungseinheit jeweils ein Schirmelement mit derart ausgebildeten Schirmverbindern aufweisen, dass diese beim Aufstecken der Baueinheit elektrisch leitend verbunden werden. Die automatisch bei der Montage auftretende Kontaktierung kann mithin noch dadurch erweitert werden, dass dies auch für die bei derartigen Hochspannungsbatterien üblicherweise vorgesehenen Schirmelemente, die für eine elektrische Abschirmung sorgen sollen, gilt. Auf diese Art und Weise ist nicht nur die Hochspannungskontaktierung und die Niedrigspannungskontaktierung, umfassend auch die Masseanbindung, beim Aufstecken und Montieren automatisch hergestellt, sondern auch die Schirmungsanbindung für die EMV.

Bereits die Tatsache, dass die zwischen dem Gehäuse und der Baueinheit hergestellten Kontaktierungen bei montierter Baueinheit mechanisch durch die Baueinheit geschützt sind, ist ein vorteilhafter Nebeneffekt der beschriebenen Hochspannungsbatterie. In diesem Kontext erweist es sich als besonders bevorzugte Ausgestaltung, wenn baueinheitseitig wenigstens die Hochspannungskontakte, insbesondere auch die Kontaktanordnung, vollständig umgebend ein Dichtelement zur Abdichtung von Verbindungsstellen gegen äußere Einflüsse vorgesehen ist. Dabei kann das Dichtelement beispielsweise als ein Dichtring ausgebildet sein. Auf diese Art und Weise ist es möglich, nachdem das Dichtelement bei montierter Baueinheit zwischen dem Gehäuse und einer Fläche der Baueinheit abdichtend wirkt, ein hervorragender Schutz der Kontakte und der Verbindungsstellen gegen äußere Einflüsse bzw. Umwelteinflüsse gegeben.

In besonders zweckmäßiger Art und Weise sind die Hochspannungskontakte und die Kontaktanordnung, insbesondere gemeinsam mit den Befestigungsmitteln, nach dem Poka Yoke-Prinzip angeordnet. Das bedeutet, dass im Wesentlichen sichergestellt ist, dass ein falsches Aufstecken, beispielsweise unter versehentlich falscher Kontaktierung, möglichst weitgehend ausgeschlossen wird, indem die Anordnung und Ausgestaltung der jeweiligen Kontakte entsprechend gewählt ist, insbesondere auch in Abstimmung mit den Befestigungsmitteln, beispielsweise der Position von Durchgangslöchern von Schrauben und dergleichen. So wird die Montage weiter vereinfacht und die Fehleranfälligkeit wird weiter reduziert.

Neben der Hochspannungsbatterie betrifft die Erfindung auch ein Kraftfahrzeug mit einer solchen Hochspannungsbatterie. Sämtliche Ausführungen bezüglich der erfindungsgemäßen Hochspannungsbatterie lassen sich analog auf das erfindungsgemäße Kraftfahrzeug übertragen, mit welchem mithin auch die bereits genannten Vorteile erhalten werden können. Insbesondere kann die elektrische Energie der Hochspannungsbatterie zum Betrieb eines Elektromotors und/oder sonstigen Verbrauchers des Kraftfahrzeugs eingesetzt werden.

Schließlich betrifft die Erfindung auch ein Verfahren zum Anbringen einer Baueinheit an einem Gehäuse einer Hochspannungsbatterie der erfindungsgemäßen Art, wobei die Baueinheit auf das Gehäuse unter Herstellung einer elektrisch leitenden Verbindung zwischen den Hochspannungskontakten und den Kontakten der Kontaktanordnung aufgesteckt wird, wobei die durch die Kontaktanordnungen und durch die Hochspannungskontakte gebildeten Schnittstellen dann kontaktiert werden, wenn die Baueinheit durch die Schrauben an dem Gehäuse befestigt wird. Auch bezüglich des erfindungsgemäßen Verfahrens gelten die Ausführungen zur Hochspannungsbatterie fort, so dass auch mit dem Verfahren die genannten Vorteile erreicht werden. Insbesondere kann nach dem Aufstecken noch eine mechanische Halterung durch als Schrauben vorgesehene Befestigungsmittel verbessert werden.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: ein erfindungsgemäßes Kraftfahrzeug,
- Fig. 2: eine erfindungsgemäße Hochspannungsbatterie in einer Außenansicht,
- Fig. 3: eine Prinzipskizze, die das Aufstecken der Baueinheit auf die Hochspannungsbatterie erläutert,
- Fig. 4: eine erste Detaildarstellung zum Berührschutz und
- Fig. 5: eine zweite Detaildarstellung zum Berührschutz.

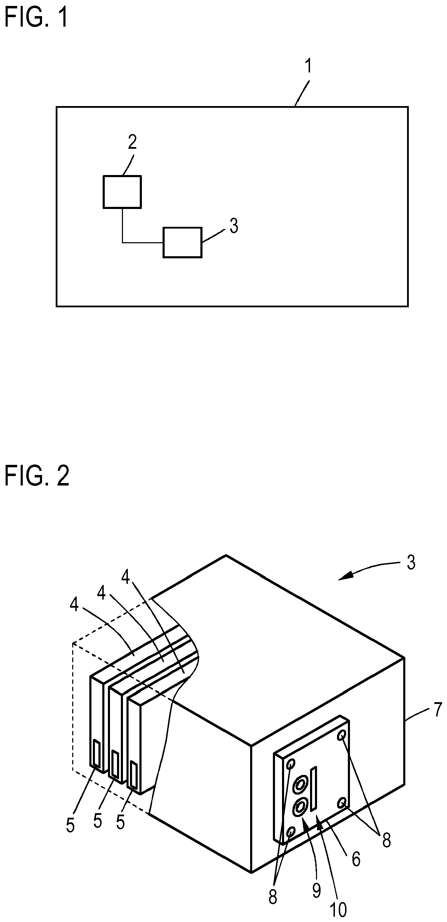

Fig. 1 zeigt eine Prinzipskizze eines erfindungsgemäßen Kraftfahrzeugs 1. Bei diesem handelt es sich um ein Elektrokraftfahrzeug oder ein Hybridkraftfahrzeug, so dass es einen Elektromotor 2 aufweist. Zur Energieversorgung des Elektromotors 2 ist dieser mit einer erfindungsgemäßen Hochspannungsbatterie 3 verbunden.

Die Hochspannungsbatterie 3 ist in einer schematischen Außenansicht in Fig. 2 genauer dargestellt, die im hinteren Bereich aufgebrochen ist, um prinzipartig dargestellte Speicherelemente 4 zu zeigen, die als Batteriezellen ausgebildet sein können. Jedem der Speicherelemente 4 ist vorliegend eine Steuereinheit 5 zugeordnet, die den Betrieb des jeweiligen Speicherelements 4 überwacht und gegebenenfalls anpassen kann. Während die Hochspannungsbatterie 3 vorliegend eine Nennspannung größer als 100 V, insbesondere größer als 200 V, liefert, werden die Steuereinheiten 5 mit der üblichen Bordnetzspannung von 12 V als Niedrigspannung betrieben.

Die für die Hochspannungsbatterie 3 erforderlichen Schütze (Schalteinrichtungen) und Sicherungen sind in einer Baueinheit 6 (Schützbox) angeordnet, die ersichtlich außen an einem die Speicherelemente 4 enthaltenden Gehäuse 7 der Hochspannungsbatterie 3 angeordnet sind. Die Baueinheit 6 ist über Schrauben 8 an dem Gehäuse 7 befestigt und weist ersichtlich nach außen hin sowohl Hochspannungsanschlüsse 9 als auch einen Steckplatz 10 für die Niedrigspannungszufuhr und Steuerleitungen auf.

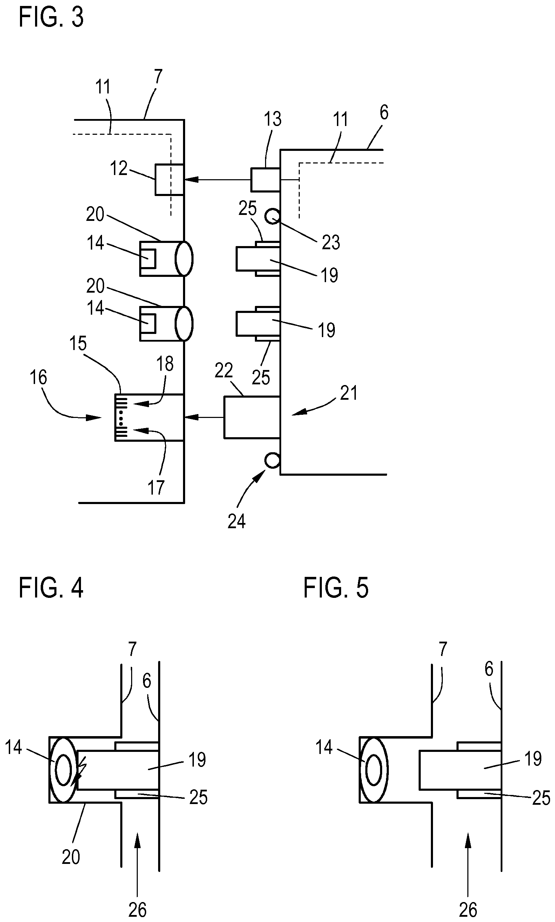

Die Kontaktierung der Baueinheit 6 ins Innere des Gehäuses erfolgt beim Aufstecken automatisch bzw. zwangsläufig, wie durch die Prinzipskizze der Fig. 3 näher erläutert werden soll. Diese zeigt das Gehäuse 7 und die Baueinheit 6 voneinander beabstandet bei einem Aufsteckvorgang, wobei zunächst noch anzumerken ist, dass sowohl das Gehäuse 7 als auch die Baueinheit 6 ein der Übersichtlichkeit halber nicht vollständig dargestelltes Schirmelement 11 zur elektromagnetischen Abschirmung aufweisen, welche elektrisch leitend mit einem gehäuseseitigen Schirmverbinder 12 respektive einem baueinheitseitigen Schirmverbinder 13 verbunden sind. Gehäuseseitig sind ferner Hochspannungskontakte 14 sowie eine als Stiftwanne 15 ausgebildete Kontaktanordnung 16 für die Niedrigspannungskontakte, die hier Stromversorgungskontakte 17 und Steuerleitungskontakte 18 aufweist, vorhanden. Diesen Kontakten jeweils zugeordnet weist die Baueinheit 6 baueinheitseitige Hochspannungskontakte 19 auf, die aus dieser hervorstehen, während die gehäuseseitigen Hochspannungskontakte 14 in Aufnahmen 20 versenkt angeordnet sind. Ferner weist die Baueinheit 6 als Kontaktanordnung 21 einen Stecker 22 mit entsprechenden, hier der Übersichtlichkeit halber nicht genauer dargestellten Stromversorgungskontakten und Steuerleitungskontakten auf.

Wie aus Fig. 3 leicht ersichtlich ist, werden beim Aufstecken der Baueinheit 6 die Verbindungen der jeweils nach dem Poka-Yoke-Prinzip angeordneten Kontakte 12, 13, 14, 19, 17, 18 und im Stecker 22 enthaltene Kontakte automatisch durch den mechanischen Aufsteckvorgang hergestellt.

Die Kontakte 19 und die Kontaktanordnung 21 der Baueinheit 6 sind zudem von einem als Dichtring 23 ausgebildeten Dichtelement 24 umgeben, die die entstehenden Verbindungsstellen vor Umwelteinflüssen schützt.

Wie in Fig. 3 ebenso erkenntlich ist, weisen die Kontakte 19 auf einer bestimmten Länge eine Ummantelung mit einem als Berührschutzvorrichtung dienenden, isolierendem Material 25 auf, das im Hinblick auf Fig. 4 und Fig. 5 näher erläutert wird. Fig. 4 zeigt einen Zustand, in dem beim Aufstecken der Baueinheit 6 der elektrische Kontakt zwischen dem Hochspannungskontakt 19 und dem Hochspannungskontakt 14 gerade eben hergestellt ist. Nachdem die Länge, über die der Kontakt 19 baueinheitseitig mit dem Material 25 überzogen ist, größer als die Tiefe der Aufnahme 20 bis zu dem Kontakt 14 gewählt ist, existiert ersichtlich im Spalt 26 zwischen der Baueinheit 6 und dem Gehäuse 7 keine freiliegende, Hochspannung führende, elektrisch leitende Fläche; der Berührschutz ist also gegeben. Zum Vergleich zeigt Fig. 5 eine Situation, in der tatsächlich innerhalb des Spalts 26 ein Teil der elektrisch leitenden Oberfläche des Hochspannungskontakts 19 freiliegt, wobei dieser allerdings weit von dem Hochspannungskontakt 14 entfernt ist, so dass kein Hochspannungsrisiko besteht.

## Patentansprüche

1. Hochspannungsbatterie (3) für ein Kraftfahrzeug (1), aufweisend wenigstens ein Speicherelement (4) für elektrische Energie, wenigstens eine mit einer niedrigeren Spannung als die Hochspannung betriebene Steuereinheit (5) und eine wenigstens eine Schalteinrichtung und/oder wenigstens eine Sicherung als elektrische Komponenten umfassende Baueinheit (6), wobei die Baueinheit (6) extern zu einem das Speicherelement (4) und die Steuereinheit (5) aufnehmenden Gehäuse (7) an diesem derart in einer vorgegebenen Lage befestigt ist, dass wenigstens zwei mit wenigstens einer der elektrischen Komponenten der Baueinheit (6) verbundene Hochspannungskontakte (19) der Baueinheit (6) bei Aufstecken der Baueinheit (6) an das Gehäuse (7) mit zugeordneten gehäuseseitigen Hochspannungskontakten (14) und wenigstens eine wenigstens einen Stromversorgungskontakt und/oder wenigstens einen Steuerleitungskontakt umfassende Kontaktanordnung (21) der Baueinheit (6) mit einer zugeordneten gehäuseseitigen, mit der Steuereinheit (5) verbundenen Kontaktanordnung (16) elektrisch leitend verbunden werden,
**dadurch gekennzeichnet,**
**dass** die Baueinheit (6) über als Schrauben (8) vorgesehene Befestigungsmittel derart an dem Gehäuse (7) gehaltert ist, dass die durch die Kontaktanordnungen (16, 21) und durch die Hochspannungskontakte (14, 19) gebildeten Schnittstellen dann kontaktiert werden, wenn die Baueinheit (6) durch die Schrauben (8) an dem Gehäuse (7) befestigt wird.

2. Hochspannungsbatterie (3) nach Anspruch 1,
**dadurch gekennzeichnet,**
**dass** eine Berührschutzvorrichtung wenigstens für die Hochspannungskontakte (14, 19) zum Berührschutz bei hergestelltem Kontakt während des Aufsteckens der Baueinheit (6) vorgesehen ist.

3. Hochspannungsbatterie (3) nach Anspruch 1 oder 2,
**dadurch gekennzeichnet,**
**dass** die baueinheitseitigen Hochspannungskontakte (19) aus dieser hervorstehend ausgebildet sind und die gehäuseseitigen Hochspannungskontakte (14) versenkt in Aufnahmen (20) für die baueinheitseitigen Hochspannungskontakte (19) angeordnet sind, wobei die baueinheitseitigen Hochspannungskontakte (19) baueinheitseitig über eine Länge mit einem isolierendem Material (25) umgeben sind, die größer als die Tiefe der Aufnahmen (20) ist.

4. Hochspannungsbatterie (3) nach einem der vorangehenden Ansprüche,
**dadurch gekennzeichnet,**
**dass** das Gehäuse (7) und die Baueinheit (6) jeweils ein Schirmelement (11) mit derart ausgebildeten Schirmverbindern (12, 13) aufweisen, dass diese beim Aufstecken der Baueinheit (6) elektrisch leitend verbunden werden.

5. Hochspannungsbatterie (3) nach einem der vorangehenden Ansprüche,
**dadurch gekennzeichnet,**
**dass** baueinheitseitig wenigstens die Hochspannungskontakte (19), insbesondere auch die Kontaktanordnung (21), vollständig umgebend ein Dichtelement (24) zur Abdichtung von Verbindungsstellen gegen äußere Einflüsse vorgesehen ist.

6. Hochspannungsbatterie (3) nach Anspruch 5,
**dadurch gekennzeichnet,**
**dass** das Dichtelement (24) ein Dichtring (23) ist.

7. Hochspannungsbatterie (3) nach einem der vorangehenden Ansprüche,
**dadurch gekennzeichnet,**
**dass** die Hochspannungskontakte (14, 19) und die Kontaktanordnungen (16, 21), insbesondere gemeinsam mit den Befestigungsmitteln, nach dem Poka Yoke-Prinzip angeordnet sind.

8. Verfahren zum Anbringen einer Baueinheit (6) an einem Gehäuse (7) einer Hochspannungsbatterie (3) nach einem der vorangehenden Ansprüche, wobei die Baueinheit (6) auf das Gehäuse (7) unter Herstellung einer elektrisch leitenden Verbindung zwischen den Hochspannungskontakten (14, 19) und den Kontakten der Kontaktanordnungen (16, 21) aufgesteckt wird, **dadurch gekennzeichnet, dass** die durch die Kontaktanordnungen (16, 21) und durch die Hochspannungskontakte (14, 19) gebildeten Schnittstellen dann kontaktiert werden, wenn die Baueinheit (6) durch die Schrauben (8) an dem Gehäuse (7) befestigt wird.

9. Kraftfahrzeug (1), aufweisend eine Hochspannungsbatterie (3) nach einem der Ansprüche 1 bis 7.

## Claims

1. High-voltage battery (3) for a motor vehicle (1), having at least one storage element (4) for electrical energy, at least one control unit (5) operated at a lower voltage than the high voltage, and a modular unit (6) comprising at least one switching device and/or at least one fuse as electrical components, wherein the modular unit (6) is attached in a pre-determined position on a housing, externally to said housing (7) that holds the storage element (4) and the control unit (5), in such a way that when the modular unit (6) is fitted onto the housing (7) at least two high-voltage contacts (19) of the modular unit (6), which are connected to at least one of the electrical components of the modular unit (6), are connected in an electrically conducting manner to assigned high-voltage contacts (14) on the housing side, and at least one contact arrangement (21) of the modular unit (6) comprising at least one current supply contact and/or at least one control line contact are connected in an electrically conducting manner to an assigned contact arrangement (16) connected to the control unit (5) on the housing side,
**characterised in that**
the modular unit (6) is attached onto the housing (7) by way of fastening means provided as screws (8), such that the interfaces formed by the contact arrangements (16, 21) and by the high-voltage contacts (14, 19) are contacted when the modular unit (6) is secured by the screws (8) onto the housing (7).

2. High-voltage battery (3) according to claim 1,
**characterised in that**
a touch protection device is provided at least for the high-voltage contacts (14, 19) for touch protection when the contact is produced during the fitting of the modular unit (6).

3. High-voltage battery (3) according to claim 1 or 2,
**characterised in that**
the high-voltage contacts (19) on the side of the modular unit are designed to protrude from the latter, and the high-voltage contacts (14) on the housing side are arranged recessed in mounts (20) for the high-voltage contacts (19) on the side of the modular unit, wherein the high-voltage contacts (19) on the side of the modular unit are surrounded by an insulating material (25) on the side of the modular unit over a length that is greater than the depth of the mounts (20).

4. High-voltage battery (3) according to any of the preceding claims,
**characterised in that**
the housing (7) and the modular unit (6) each have a screening element (11) with screen connectors (12, 13) designed in such a way that they are connected in an electrically conducting manner when the modular unit (6) is fitted.

5. High-voltage battery (3) according to any of the preceding claims,
**characterised in that**
a sealing element (24) is provided completely surrounding at least the high-voltage contacts (19) on the side of the modular unit, in particular also the contact arrangement (21), in order to seal connecting points from external influences.

6. High-voltage battery (3) according to claim 5,
**characterised in that**
the sealing element (24) is a sealing ring (23).

7. High-voltage battery (3) according to any of the preceding claims,
**characterised in that**
the high-voltage contacts (14, 19) and the contact arrangements (16, 21), in particular together with the fastening means, are arranged according to the poka-yoke principle.

8. Method for installing a modular unit (6) onto a housing (7) of a high-voltage battery (3) according to any of the preceding claims, wherein the modular unit (6) is fitted onto the housing (7) by producing an electrically conducting connection between the high-voltage contacts (14, 19) and the contacts of the contact arrangements (16, 21), **characterised in that** the interfaces formed by the contact arrangements (16, 21) and the high-voltage contacts (14, 19) are contacted when the modular unit (6) is secured by the screws (8) onto the housing (7).

9. Motor vehicle (1), having a high-voltage battery (3) according to any of claims 1 to 7.

## Revendications

1. Batterie haute tension (3) pour un véhicule automobile (1), présentant au moins un élément de stockage (4) d'énergie électrique, au moins une unité de commande (5) alimentée avec une tension inférieure à la haute tension et une unité modulaire (6) comprenant au moins un dispositif de commutation et/ou au moins un fusible comme composants électriques, dans laquelle l'unité modulaire (6) est fixée à l'extérieur d'un boîtier (7) recevant l'élément de stockage (4) et l'unité de commande (5), dans une position prédéterminée sur celui-ci, de sorte qu'au moins deux contacts haute tension (19) de l'unité modulaire (6) connectés à au moins l'un des composants électriques de l'unité modulaire (6) sont connectés de manière électriquement conductrice lors de l'enfichage de l'unité modulaire (6) au niveau du boîtier (7) à des contacts haute tension associés côté boîtier (14) et à au moins un agencement de contacts (21) de l'unité modulaire (6) comprenant au moins un contact d'alimentation et/ou au moins un contact de ligne de commande avec un agencement de contacts associé côté boîtier (16) connecté à l'unité de commande (5),
**caractérisée en ce**
**que** l'unité modulaire (6) est retenue au niveau du boîtier (7) par l'intermédiaire de moyens de fixation fournis sous la forme de vis (8), de telle sorte que les interfaces formées par les agencements de contact (16, 21) et par les contacts haute tension (14, 19) sont mises en contact lorsque l'unité modulaire (6) est fixée au boîtier (7) par les vis (8).

2. Batterie haute tension (3) selon la revendication 1,
**caractérisée en ce**
**qu'**un dispositif de protection contre un contact accidentel est prévu au moins pour les contacts haute tension (14, 19), pour une protection contre un contact accidentel lorsqu'un contact se produit lors de l'enfichage de l'unité modulaire (6).

3. Batterie haute tension (3) selon la revendication 1 ou 2,
**caractérisée en ce**
**que** les contacts haute tension côté unité modulaire (19) sont réalisées en saillie à partir de celle-ci et les contacts haute tension côté boîtier (14) sont agencés enfoncés dans des logements (20) pour les contacts haute tension côté unité modulaire (19), dans laquelle les contacts haute tension côté unité modulaire (19) sont entourés côté unité modulaire par une longueur d'un matériau isolant (25), qui est supérieure à la profondeur des logements (20).

4. Batterie haute tension (3) selon l'une quelconque des revendications précédentes,
**caractérisée en ce**
**que** le boîtier (7) et l'unité modulaire (6) présentent respectivement un élément de blindage (11) avec des connecteurs de blindage (12, 13) réalisés de telle sorte qu'ils sont connectés de manière électriquement conductrice lorsque l'unité modulaire (6) est enfichée.

5. Batterie haute tension (3) selon l'une quelconque des revendications précédentes,
**caractérisée en ce**
**qu'**au moins les contacts haute tension côté unité modulaire (19), en particulier également agencement de contacts (21), sont prévus entourant complètement un élément d'étanchéité (24) pour étanchéifier des joints contre des facteurs extérieurs.

6. Batterie haute tension (3) selon la revendication 5,
**caractérisée en ce**
**que** l'élément d'étanchéité (24) est un joint torique (23).

7. Batterie haute tension (3) selon l'une quelconque des revendications précédentes,
**caractérisée en ce**
**que** les contacts haute tension (14, 19) et les agencements de contact (16, 21), en particulier conjointement avec les moyens de fixation, sont agencés selon le principe Poka Yoke.

8. Procédé de montage d'une unité modulaire (6) sur un boîtier (7) d'une batterie haute tension (3) selon l'une quelconque des revendications précédentes, dans lequel l'unité modulaire (6) est enfichée sur le boîtier (7) pour établir une connexion électriquement conductrice entre les contacts haute tension (14, 19) et les contacts des agencements de contact (16, 21), **caractérisé en ce que** les interfaces formées par les agencements de contact (16, 21) et par les contacts haute tension (14, 19) sont ensuite mises en contact lorsque l'unité modulaire (6) est fixée au boîtier (7) par les vis (8).

9. Véhicule automobile (1), présentant une batterie haute tension (3) selon l'une quelconque des revendications 1 à 7.
